# EUROPEAN PATENT APPLICATION

(11) **EP 1 676 617 A1**
(43) Date of publication of application: **05.07.2006**
(21) Application number: 05111893.3
(22) Date of filing: 09.12.2005
(51) Int. Cl.: B01D 25/127, B01D 25/172, B01D 25/164, B01D 25/34, B01D 25/32, B01D 25/38

(54) **Unloading element for filter press and associated supporting structure**

(30) Priority: 28.12.2004 IT BO20040820
(71) Applicant: Grigoletti, Franco, 48022 Lugo, RA (IT)
(72) Inventor: Grigoletti, Franco, 48022 Lugo, RA (IT)
(74) Representative: Modiano, Micaela Nadia

(57) **Abstract**

An unloading element for filter press and associated supporting structure, comprising supporting means for filtering sheets (4) which can move vertically between respective plates (3) from a raised configuration for filtration, with the plates (3) clamped together, to a lowered unloading configuration, in which the plates (3) are spaced and mutually proximate. The supporting means comprise a supporting frame constituted by fixed supporting columns (10), which support at least one beam (11) which is arranged longitudinally with respect to the filter press (2), and a linear actuator (22), which is movably coupled to the at least one beam (11), a bar (25) coupled to the end edge of a respective filtering sheet (4) being stably associated with the end of the actuator (22) that lies opposite the end rigidly coupled to the beam (11).

## Description

The present invention relates to an unloading element for a filter press and to the associated supporting structure.

Currently, as disclosed in Italian Patent No. 01258500 filed in the name of Franco Grigoletti on 6 February 1992, filter presses are constituted by a plurality of plates which are packed longitudinally.

It is known that liquid substances are filtered by using filter presses constituted in practice by a series of packed plates which are hollow in a central region and between which respective filtering sheets are interposed so as to form a succession of chambers into which the liquid to be filtered is fed. The plates and the associated sheets are provided with corresponding holes, which are adapted to form, upon assembly, a duct which is used to feed the the liquid to be filtered; in order to prevent the sheets from clinging to the plates, during filtration, such plates are provided with respective grooves, which are also intended to facilitate the flow of the filtrate toward the lower part, from which it is extracted by means of appropriately provided channels.

The plate pack is clamped between a fixed head and a movable head under the actuation of a suitable jack, which acts axially with respect to such pack. For this purpose, the plates are supported so that they can slide on mutually opposite lateral guides, which are horizontally parallel and are conveniently rigidly coupled to the fixed head.

Two filtering sheets are associated with each plate and are adapted to cover respectively its opposite front surfaces.

These filtering sheets are formed by two separate elements, which are coupled by a collar designed to enter the hole of the plate. Such sheets are of course perforated at the collar.

The solid filtered from the liquid collects in the chambers formed between the adjacent plates until it forms a sort of cake, also known as briquette. This cake is in contact with respective filtering sheets on its opposite surfaces.

The need therefore arises to unload periodically from the filter press the cakes formed by the filtration residues. This operation is generally performed by moving mutually apart the plates by way of the sliding of the movable head so as to open the filtration chambers and allow such cakes to fall by gravity.

However, sometimes the cakes do not separate, due to the force of adhesion to the filtering sheets, and therefore the intervention of an operator who manually performs a suitable mechanical action is required. This evidently entails a substantial limitation of the productivity of the filter press.

The plates are arranged in a pack and are adapted to be clamped between a fixed head and a movable head under the actuation of a jack which acts axially with respect to the pack. For this purpose, the plates are supported so that they can slide on mutually opposite lateral guides, which are arranged horizontally parallel and are conveniently rigidly coupled to a framework of which the fixed head is a part.

The device for unloading the cakes formed by the filtration residues is provided with upper supporting means for the filtering sheets, which are constituted by a series of beam elements which are supported so that they can move vertically under the actuation of a corresponding series of pneumatic or hydraulic cylinders. The cylinders are supported with a vertical axis by a bridge-like framework, which is fixed, at its opposite ends, by means of brackets, to the sides of a corresponding plate. In practice, preferably one frame, and consequently one cylinder, is fitted for every two plates in an alternating arrangement.

The beam elements can move between a raised filtration position, in which the filtering sheets are stretched, and a lowered unloading position, in which an upper portion of the sheets forms a fold which is adapted to facilitate the separation of the cakes.

The descent of the beam elements to the unloading position is performed in combination with a limited opening of the filtration chambers, in practice by the extent sufficient to allow the separation and fall of the corresponding cakes.

This type of unloading apparatus for filter press negatively has a large vertical size, which does not allow to install it in spaces which are insufficiently large and complicates maintenance considerably.

The configuration of the unloading device disclosed in Italian Patent No. 01258500 is such that its center of gravity (for each individual filtering sheet and associated supporting and movement assembly) lies above the point where the plates rest on the shell of the filter press: the consequence of this arrangement is severe dynamic instability, i.e., the plate tends to wobble. The placement of the center of gravity in the upper portion of the filter press is due to the fact that such upper portion requires, for correct operation, to be almost four times higher than the lower portion.

The elements that constitute the known device are all long and narrow, in order to minimize overall weight and allow the smallest possible bulk when the plates are mutually adjacent. The slenderness of such elements entails great flexibility, with the consequence that said elements tend to oscillate and vibrate: the filter press can therefore operate unevenly due to these oscillations.

In particular, precision in the mutual placement of the various parts is compromised, and this is substantially a condition of high static instability.

The aim of the present invention is to obviate the above-mentioned drawbacks and meet the mentioned requirements, by providing an unloading element for a filter press and the associated supporting structure with reduced vertical space occupation.

Within this aim, an object of the present invention is to provide an unloading element for filter press and an associated supporting structure which have high dynamic stability.

Another object of the present invention is to provide an unloading element for filter press and an associated supporting structure which has high static stability.

A further object of the present invention is to provide an unloading element for filter press and an associated supporting structure which has high precision in its vertical movement.

Another object of the present invention is to provide a device which is simple, relatively easy to provide in practice, safe in use, effective in operation, and has a relatively low cost.

This aim and these and other objects that will become better apparent hereinafter are achieved by the present unloading element for filter press and associated supporting structure, of the type which comprises supporting means for filtering sheets which can move vertically between respective plates from a raised configuration for filtration, with the plates clamped together, to a lowered unloading configuration, in which the plates are spaced and mutually proximate, characterized in that said supporting means comprise a supporting frame constituted by fixed supporting columns, which support at least one beam which is arranged longitudinally with respect to the filter press, and a linear actuator, which is movably coupled to said at least one beam, a bar coupled to the end edge of a respective filtering sheet being stably associated with the end of said actuator that lies opposite the end rigidly coupled to the beam.

Further characteristics and advantages of the invention will become better apparent from the following detailed description of a preferred but not exclusive embodiment of an unloading element for a filter press and associated supporting structure, illustrated by way of non-limiting example in the accompanying drawings, wherein:

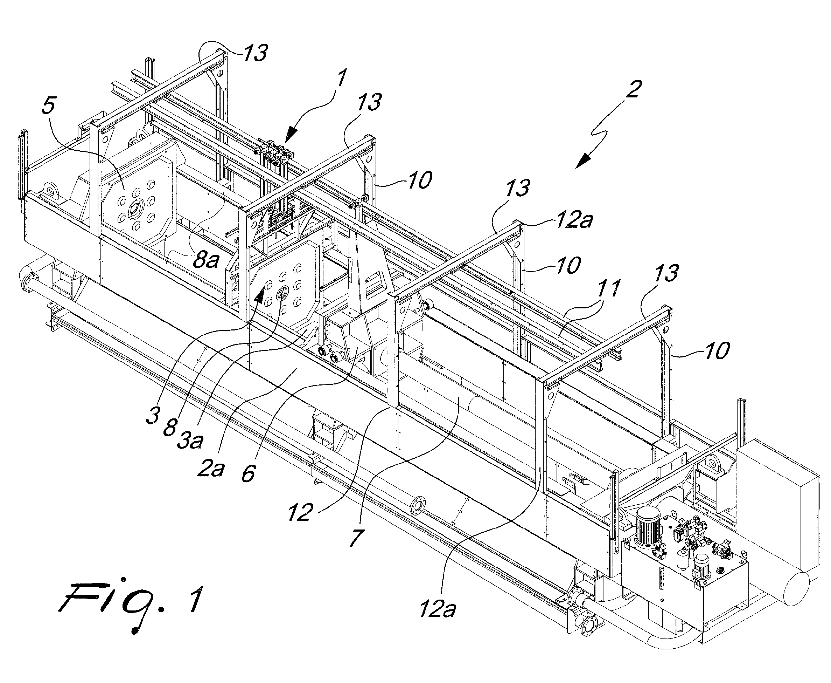

Figure 1 is a perspective view of a filter press provided with an unloading element according to the invention;

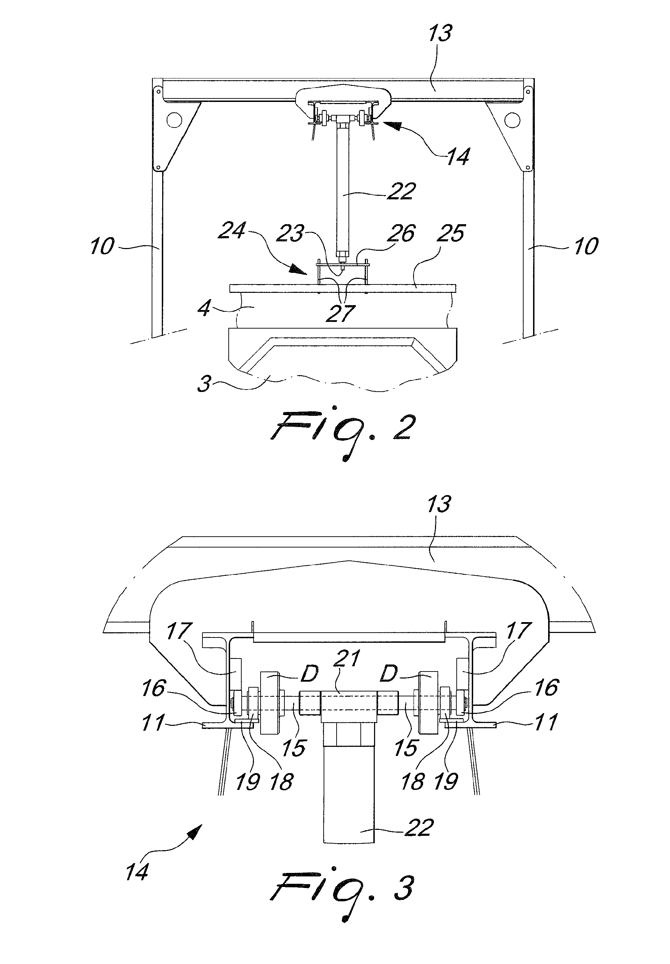

Figure 2 is a front view of the upper portion of an unloading element according to the invention;
Figure 3 is a detailed enlarged-scale front view of the upper portion of an unloading element according to the invention;
Figure 4 is a sectional view, taken along a longitudinal vertical plane, of a detail of an unloading element according to the invention;
Figure 5 is a sectional perspective view, taken along a longitudinal vertical plane, of a detail of an unloading element according to the invention;
Figure 6 is a detailed enlarged-scale front view of the upper portion of a second embodiment of an unloading element according to the invention;
Figure 7 is a detailed enlarged-scale front view of the upper portion of a third embodiment of an unloading element according to the invention.

With reference to the figures, the reference numeral 1 generally designates an unloading filter for a filter press 2.

Each filter press 2 (even of a traditional type) is provided with a plurality of plates 3; two filtering sheets 4 are associated with each plate 3 and are adapted to cover respectively its opposite front surfaces.

The plates 3 are packed and are adapted to be clamped between a fixed head 5 and a movable head 6, under the actuation of a jack 7, which acts axially with respect to said pack. For this purpose, the plates 3 are supported so that they can slide on mutually opposite lateral guides 8a, which are horizontally parallel and conveniently rigidly coupled to a framework 2a of which the fixed head 5 is a part.

The plates 3 are recessed bilaterally in a central region 3a, so as to form, when they are clamped together, a sequence of chambers into which the liquid to be filtered is fed.

The plates 3 and the filtering sheets 4 associated therewith are provided with corresponding holes 8, which are adapted to form, upon assembly, a duct which is used to feed the liquid to be filtered. At the holes 8, the sheets 4 are rigidly coupled by a collar which covers, in the assembly position, the hole 8 of the corresponding plate 3.

The filtering sheets 4 of each plate 3 are further fastened to each other by means of laces, which are tied at the sides of the plate 3, below the plane formed by the duct and its lower side.

Respective cakes of sediment (residue of the filtration of the liquid) form in the chambers of the filter press during filtration.

The device 1 for unloading the cakes formed by the filtration residues, of the traditional type and disclosed in Italian Patent No. 01258500, is provided with upper supporting means for the filtering sheets 4, which are constituted by a series of beam elements, which are supported so that they can move vertically under the actuation of a corresponding series of pneumatic or hydraulic cylinders. The cylinders are supported with a vertical axis by a bridge-like framework, which is fixed at its opposite ends, by means of brackets, to the sides of the corresponding plate 3. In practice, a framework, and consequently a cylinder, is fitted preferably for every two plates 3, in an alternating arrangement.

The beam elements can move between a raised filtration position, in which the filtering sheets 4 are stretched, and a lowered unloading position, in which an upper portion of said sheets forms a fold, which is adapted to facilitate the separation of the cakes.

The descent of the beam elements into the unloading position is performed in combination with a limited opening of the filtration chambers, in practice by the extent sufficient to allow the separation and fall of the corresponding cakes.

In practice, the plates 3 are mutually concatenated, the end plates 3 of the pack being rigidly coupled respectively to the heads 5 and 6. The opening of the first fraction of filtration chambers is provided by moving the movable head 6, while the first plate 3 of the second fraction is conveniently blocked. Subsequently, a suitable device moves the last plate 3 of the first fraction so as to clamp the plates 3 of said first section and simultaneously pull open the plates 3 of the second section; the gradual opening of the subsequent provided fractions is provided in a similar manner.

The opening of the filtration chambers allows the cakes to fall by gravity; the cakes that remain attached to the sheets 4 are instead detached by the descent of the beam elements.

At the open filtration chambers, the descent of the beam elements in fact produces the collapse of the corresponding filtering sheets 4 and forms a fold in the upper portion of the sheets 4, so that the sheets 4, being no longer stretched, are drawn downward by the weight of the cakes; the collapsible portion in practice reaches the collar of the sheets 4.

The unloading element 1 according to the invention is provided with a supporting structure 3, of the type which comprises particular supporting means for the filtering sheets 4, which can move vertically between the respective plates 3: a supporting frame 9 is constituted by fixed supporting columns 10, which support two beams 11, which are arranged longitudinally and above the filter press 2.

The columns 10 are distributed along the filter press and their respective bases 12 are stably coupled to the fixed shell 2a of the filter press 2 and the heads 12a are stably coupled to a cross-member 13 for supporting the beams 12. The number of columns 10 is linked to the structural stability of the filter press 2, and therefore the longer the filter press 2 is, the more the columns 10 are.

The beams 11 used are of the so-called "double-T" type and therefore have a central longitudinal element (arranged vertically in the present embodiment) and respective end wings (which are arranged horizontally).

The beams 11 are intended to support a movement unit 14, which comprises a shaft 15, which is arranged transversely with respect to the beams 11 (and for this purpose is slightly shorter than the center distance of the longitudinal elements of the two beams 11).

Reduced-friction rolling means (16, 18) are stably engaged on the shaft 15: in the particular embodiment shown in the figure, such means are four.

Two of the means 16 are engaged with the ends of the shaft 15 and rest on respective upper flat guides 17, which are rigidly coupled to the beams (which are generally constituted by a border which is welded, or otherwise stably fixed, to the longitudinal element of the beam 11).

The other two means 18 are engaged in portions of the shaft 15 which lie further inward and rest, even indirectly, on the internal horizontal wing of the respective beam 11: the means 18 can rest directly on the wing of the beam 11 or (as in the embodiment shown in the figure) can rest on appropriately provided laminas 19 which are welded (or otherwise stably fixed) to the wing of the beam 11.

Depending on the requirements imposed on the filter press 2 (overall mass processed and continuous or intermittent type of service, but also overall cost of the system), the rolling means 16 and 18 can be bearings or bushings made of antifriction or friction-resistant material.

A block 21 for connection to a linear actuator 22 is rigidly coupled at the centerline of the shaft 15.

The linear actuator 22 is therefore movably coupled to the beams 11 (as a consequence of the possibility of the unit 14 to move along the pair of beams 11) and is constituted generally by a fluid-operated cylinder (pneumatic cylinder or hydraulic cylinder, depending on the power levels involved and on the type of service required), in which a movable stem 23 is coupled to the filtering sheet 4. According to other possible embodiments, the actuator 22 can be provided by using a screw-and-nut coupling, actuated by a respective motor which is controlled so as to manage its elongation.

A stiffening frame 24 and a bar 25 are interposed between the stem 23 and the filtering sheet 4; the frame is constituted by a transverse stem 26 and by two vertical tension members 27, which are adapted to keep the orientation of the bar 25 constant, said bar in turn being designed to keep the filtering sheet 4 correctly stretched, its upper end being in fact engaged in the bar 25.

The shaft 15 can also support optional discs D, which are designed to ensure that, even as a consequence of the presence of unwanted external mechanical actions, the shaft 15 cannot disengage from the beams 11 and disable the filter press 2.

The operation of the invention is as follows: during the filtering operations already described according to Italian Patent No. 01258500, the plates 3 and therefore also the respective filtering sheets 4 move longitudinally with respect to the filter press 2 and remain parallel and rested on a respective vertical plane.

Once the jack 7 has packed and compressed all the plates 3 together and the liquid has therefore been filtered, the plates 3 (again under the action of the jack 7) are separated in order to facilitate the separation of the cakes of residual material.

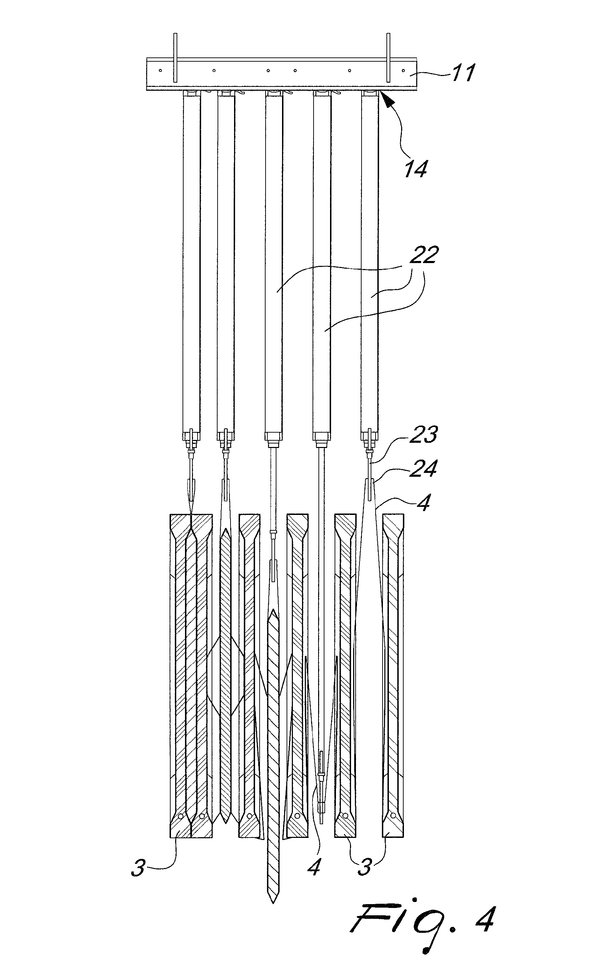

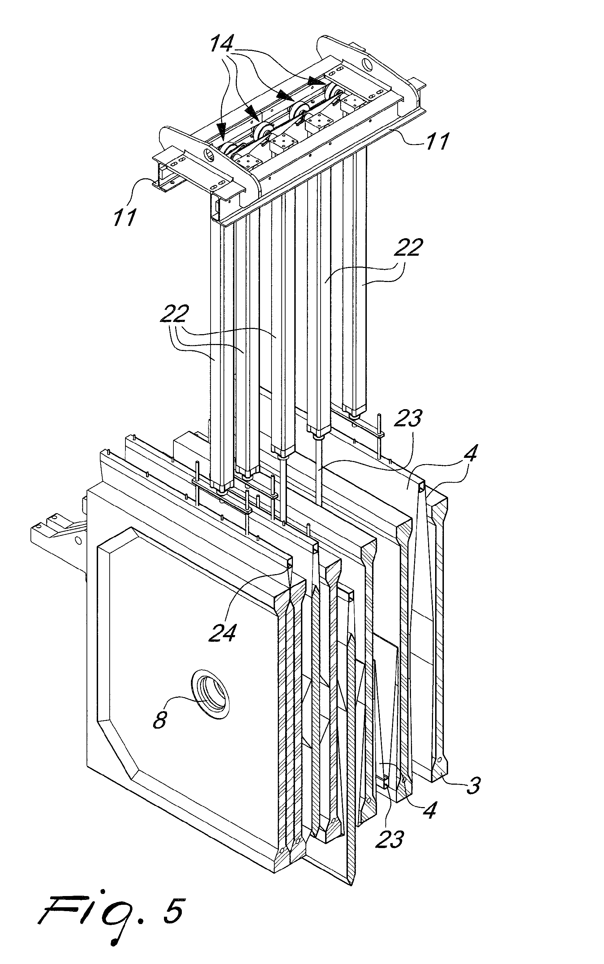

The plates 3 are separated by concatenated traction: the separation of the plates 3 is such that the distance between them is equal to, or slightly greater than, the thickness of the cake of residual material (the successive configurations in which the plates 3 are arranged are shown clearly in Figures 4 and 5).

In this situation, the actuator 22 (which is substantially aligned with the center of the interspace between two consecutive plates 3) is activated: the stem 23 extends until it enters the interspace, moving the bar 25 (and therefore the sheet 4) to a lowered position down to the lower edge of the plate 3, therefore facilitating the separation of the cake.

This operation is of course performed at all the sheets 4 comprised between a respective pair of plates 3.

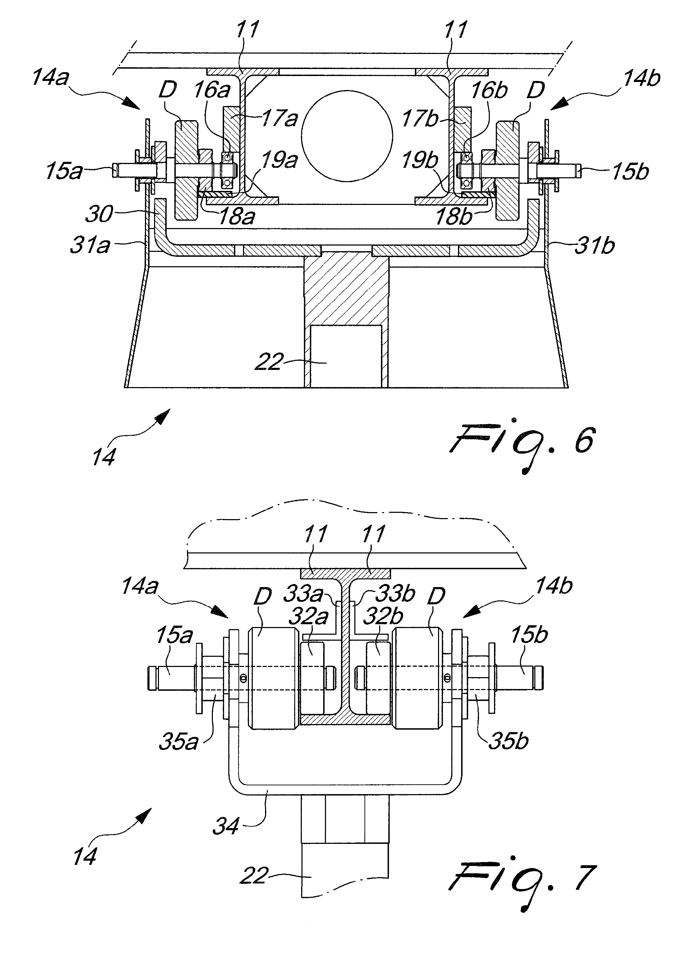

The unit 14 can also be provided according to the embodiment shown in Figure 6.

In this configuration, the unit 14 is actually constituted by two parts 14a and 14b, each of which comprises a respective shaft (15a and 15b), respective reduced-friction rolling means (16a and 18a, 16b and 18b), which rest on respective guides (17a and 19a,17b and 19b).

A bracket 30 is connected to the outer ends of the shafts 15a and 15b by means of respective flaps 31a and 31b: the bracket 30 is intended to support the actuation system 22.

This second embodiment can be provided substantially with the same dimensions as the one described above, but it is less stable and has greater adjustment difficulties.

The unit 14 can also be provided according to the embodiment shown in Figure 7: this embodiment provides for the presence of a single beam 11.

In this configuration also, the unit 14 is actually constituted by two parts 14a and 14b, each of which comprises a respective shaft (15a and 15b), respective reduced-friction rolling means (32a and 32b), which are rigidly coupled in an upper region by respective guides (33a and 33b) and rest in a lower region on the wings of the beam 11.

A bracket 34 is connected to the outer ends of the shafts 15a and 15b and is locked by respective threaded means 35a and 35b: the bracket 34 is intended to support the actuation system 22.

This third embodiment can be provided substantially with dimensions that are distinctly smaller than the one described earlier and therefore can be used in all situations in which the filter press must be installed in limited spaces: with respect to the main embodiment described, however, it is less stable and more difficult to adjust.

Advantageously, the unloading element 1 for the filter press 2 that has been described has reduced vertical dimensions: therefore, it can be installed easily even in existing structures which have small dimensions, and this characteristic is very important considering that this type of system is often installed within extraction mines and therefore must be suitable to work within tunnels in small spaces.

Positively, the unloading element 1 for the filter press 2 according to the invention has high dynamic stability, since the sheet 4 and the corresponding actuator 22 "hang" from the beams 11 and therefore their weight does not affect the operations linked to their movement or to the movement of the plates 3.

Conveniently, the unloading element 1 for the filter press 2 also has high static stability, since the structural elements that constitute it (columns 10, beams 11 and cross-members 13) do not need to be provided with reduced ratios between their cross-section and length (slenderness) and therefore do not flex easily and are not subj ected to axial stresses sufficient to render them unstable.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the examples of embodiment shown, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.

The disclosures in Italian Patent Application No. BO2004A000820 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An unloading element for filter press and associated supporting structure, of the type which comprises supporting means for filtering sheets (4) which can move vertically between respective plates (3) from a raised configuration for filtration, with the plates (3) clamped together, to a lowered unloading configuration, in which the plates (3) are spaced and mutually proximate, **characterized in that** said supporting means comprise a supporting frame constituted by fixed supporting columns (10), which support at least one beam (11) which is arranged longitudinally with respect to the filter press (2), and a linear actuator (22), which is movably coupled to said at least one beam (11), a bar (25) coupled to the end edge of a respective filtering sheet (4) being stably associated with the end of said actuator (22) that lies opposite the end rigidly coupled to the beam (11).

2. The element according to claim 1, **characterized in that** said beams (11) are two and are arranged parallel and horizontally above said filter press (2).

3. The element according to claim 1, **characterized in that** said columns (10) are distributed along the filter press (2) and have their respective bases (12) stably coupled to the fixed shell (12a) of the filter press (2) and the heads (2b) stably coupled to a cross-member (13) for supporting said at least one beam (11).

4. The element according to claim 1, **characterized in that** said actuator (22) is a fluid-operated cylinder, in which the movable stem (23) is coupled to said bar (25).

5. The element according to claim 4, **characterized in that** a stiffening frame (24) is interposed between said stem (23) and said bar (25) and is adapted to keep the orientation of said bar (25) constant.

6. The element according to one or more of the preceding claims, **characterized in that** an unit (14) is interposed between said actuator (22) and said beams (11) and comprises a shaft (15), which is arranged transversely with respect to said beams (11) and is slightly shorter than the center distance of the two beams (11), reduced-friction rolling means (16, 18) which are engaged on said shaft (15), and a block (21) for connection to said actuator (22), which is rigidly coupled to said shaft (15) at its centerline.

7. The element according to claim 6, **characterized in that** said reduced-friction rolling means (16, 18) are four, two of them (16) being engaged with the ends of said shaft (15) and resting on respective upper flat guides (17) which are rigidly coupled to the beams (11), the other two (18) being engaged in portions located further inward of said shaft (15) and resting, even indirectly, on the inner horizontal wing of each one of said beams (11).

8. The element according to claim 6, **characterized in that** said reduced-friction rolling means (16, 18) are bearings.

9. The element according to claim 6 and as an alternative to claim 8, **characterized in that** said reduced-friction rolling means (16, 18) are bushings made of antifriction material.
